# DEMANDE DE BREVET EUROPEEN

(11) **EP 0 542 653 A1**
(43) Date de publication de la demande: **19.05.1993**
(21) Numéro de dépôt: 92440018.7
(22) Date de dépôt: 10.02.1992
(51) Int. Cl.: F24H 9/20, G05D 23/19

(54) **Procédé et installation de chauffage d'un local domestique ou autre, mettant en oeuvre au moins un appareil de chauffage à accumulation**

(30) Priorité: 14.11.1991 FR 9114363
(71) Demandeur: Bonte, Michel, F-60250 Mouy (Oise) (FR)
(72) Inventeur: Bonte, Michel, F-60250 Mouy (Oise) (FR)
(74) Mandataire: Duthoit, Michel Georges André

(57) **Abrégé**

L'invention est relative à un procédé et une installation de chauffage à un local domestique ou autre.

L'installation comporte au moins un appareil de chauffage (5-9) à accumulation, des moyens de mesure de la température extérieure au local (10), et des moyens de commande pour stocker périodiquement une quantité de chaleur au niveau du ou des dits accumulateurs.

Ces moyens de commande comprennent :
- des moyens (23) pour délivrer une consigne de charge de référence à l'ensemble de l'installation fonction de la température extérieure au local,
- des moyens (24-26) pour corriger la dite consigne de charge au niveau de chaque accumulateur (5-9) en fonction du besoin réel demandé à l'accumulateur concerné pendant la période précédente.

## Description

L'invention est relative à un procédé et une installation de chauffage d'un local domestique ou autre, mettant en oeuvre au moins un appareil de chauffage à accumulation.

Elle trouvera notamment son application dans le domaine du chauffage électrique et dans celui de la construction de telles installations.

On connaît le chauffage des locaux, dit par accumulation, par lequel on stocke périodiquement l'énergie calorifique dans au moins un appareil de chauffage à accumulation, dit accumulateur, puis, dans la période suivante, on puise l'énergie dans l'accumulateur en fonction des besoins du local.

Les appareils de chauffage à accumulation, utilisent généralement l'électricité pour constituer une réserve de chaleur dans un noyau accumulateur. Cette accumulation étant effectuée, l'appareil autorise d'une part un chauffage statique par rayonnement et d'autre part un chauffage dynamique, par l'intermédiaire d'une turbine, qui crée un flux de chaleur dirigé vers la zone à chauffer.

Ces accumulateurs ont connu un essort important dès leur apparition sur le marché car ils permettaient de bénéficier de tarifs d'énergie avantageux, les organismes fournisseurs d'énergie facturant les kilo-Watts consommés dans des périodes creuses, telles que par exemple la nuit, à un tarif nettement inférieur à ceux consommés en heures pleines.

Cependant les premiers accumulateurs fonctionnaient en quelque sorte en tout ou rien, c'est-à-dire que la nuit ils absorbaient une charge maximum correspondant à leur puissance et le jour ils restituaient cette énergie quelles que soient les conditions météorologiques et les conditions locales.

Ainsi, notamment pendant les périodes d'entre saisons, il était constant de devoir ouvrir les fenêtres du local surchauffé, et malgré l'économie enregistrée pendant l'appel de puissance en période creuse, on constatait une consommation finale équivalente au chauffage traditionnel.

Aucune régulation n'étant mise en oeuvre avec la première génération d'accumulateurs, leur utilisation a très vite chuté au profit des radiateurs convecteurs directs qui étaient moins coûteux à l'achat et qui procuraient un bilan de consommation comparable.

Pour pallier ces inconvénients, certains constructeurs ont proposé des installations de chauffage à partir d'appareils de chauffage à accumulation équipés d'une régulation de fonctionnement compte tenu de la température extérieure au local.

Pour ce, ces installations sont équipées d'une sonde extérieure qui mesure en permanence la température extérieure, et qui en fonction de ces données, permet de limiter la quantité d'énergie à emmagasiner qui sera ensuite puisée au fur et à mesure.

Cependant, les organismes de distribution d'énergie favorisant la consommation la nuit plutôt que le jour, et la température extérieure de nuit étant généralement beaucoup plus basse que celle de jour, on constate encore une suraccumulation de chaleur pendant la nuit, ce qui provoque, notamment pendant la période d'entre-saisons, un inconfort dû à une surchauffe diurne.

Par ailleurs, les distributeurs d'énergie, pour faire face aux consommations ponctuelles très élevées, sont obligés d'augmenter les capacités de production de façon très importante, et pour éviter d'en arriver à des puissances trop importantes vis-à-vis d'une consommation moyenne beaucoup plus faible, appliquent des tarifs dissuasifs, très élevés, pendant ces moments de pointe.

Le but de la présente invention est de proposer un procédé et une installation de chauffage d'un local domestique ou autre qui permettent de pallier les inconvénients des systèmes connus et de profiter au maximum des avantages des tarifs "heures pleines-heures creuses" des distributeurs d'énergie.

Un des buts de la présente invention est de proposer un procédé et une installation de chauffage d'un local domestique ou autre équipé d'un système de régulation permettant un stockage périodique de l'énergie calorifique dans au moins un appareil de chauffage à accumulation, ce stockage étant réalisé compte tenu de la température extérieure, mais également des apports d'énergie au niveau de l'intérieur du local. Autrement dit, grâce à la présente invention, on peut prendre en considération, par exemple pièce par pièce, les apports solaires, les dissipations locales de chaleur gratuite ou encore l'importance de l'occupation des locaux.

Un des buts de la présente invention est de proposer un procédé et une installation de chauffage d'un local domestique ou autre, qui permettent la détermination de la quantité de chaleur qui doit être stockée compte tenu du climat effectif pendant la période précédente à l'accumulation et du besoin réel de chaleur du local.

D'autres buts et avantages de la présente invention apparaîtront au cours de la description qui va suivre, qui n'est cependant donnée qu'à titre indicatif et qui n'a pas pour but de la limiter.

Selon l'invention, le procédé de chauffage d'un local domestique ou autre dans lequel on stocke périodiquement l'énergie calorifique dans au moins un appareil de chauffage à accumulation, dit "accumulateur", et on puise l'énergie en fonction des besoins du local, est caractérisé en ce que l'on détermine la quantité de chaleur à stocker selon une consigne de charge de référence fonction de la température extérieure au local et en ce que l'on corrige la dite consigne de charge, au niveau de chaque accumulateur, en fonction du besoin réel demandé à l'accumulateur concerné pendant la période précédente.

Selon une autre caractéristique du procédé de l'invention, pour une zone donnée du local à chauffer, on charge le ou les accumulateurs concernés à une valeur telle que le chauffage soit principalement effectué par rayonnement thermique compte tenu de la situation vécue lors de la période précédente.

En outre, la dite correction de charge de chaque accumulateur est notamment réalisée selon la décharge dynamique de l'accumulateur concerné.

Par ailleurs, l'installation de chauffage d'un local domestique ou autre, autorisant la mise en oeuvre du procédé de la présente invention, comprenant au moins un appareil de chauffage à accumulation dit "accumulateur", des moyens de mesure de la température extérieure au local, et des moyens de commande pour stocker périodiquement une quantité de chaleur au niveau du ou des dits accumulateurs, est caractérisée par le fait que les dits moyens de commande comprennent :
- des moyens pour délivrer une consigne de charge de référence à l'ensemble de l'installation fonction de la température extérieure locale,
- des moyens pour corriger la dite consigne de charge au niveau de chaque accumulateur, en fonction du besoin réel demandé à l'accumulateur concerné pendant la période précédente.

L'invention sera mieux comprise à la lecture de la description suivante accompagnée des dessins en annexe qui en font partie intégrante.

La figure 1 montre schématiquement une installation de chauffage à titre d'exemple conçue selon la présente invention.

La figure 2 montre schématiquement le fonctionnement et la régulation du procédé de chauffage de la présente invention.

Les figures 3a à 3e montrent différentes courbes représentant en fonction du temps :
- une évolution, à titre d'exemple, de la température extérieure,
- la relation entre le niveau de charge à atteindre et la température extérieure mesurée,
- l'évolution de la consigne de charge de référence déterminée,
- l'évolution de la quantité de chaleur emmagasinée et restituée,
- l'évolution de la température à l'intérieur du local.

L'invention vise un procédé et une installation de chauffage d'un local domestique ou autre. Bien que plus spécialement développée pour une application au chauffage électrique, la présente invention serait néanmoins applicable à tout type de chauffage par accumulation.

Dans un tel procédé de chauffage, il est connu de stocker périodiquement l'énergie calorifique dans au moins un appareil de chauffage à accumulation, dit "accumulateur" puis de puiser l'énergie pendant la période consécutive au stockage.

Du point de vue coût de revient de l'énergie consommée, un tel mode de chauffage est avantageux lorsque l'on peut bénéficier de tarifs différents, par exemple heures pleines ou heures creuses, consentis par l'organisme distributeur d'énergie. Naturellement, dans ce cas, l'accumulation est principalement effectuée pendant le tarif le plus économique, c'est-à-dire en heures creuses.

Afin de pouvoir tenir compte du climat auquel est assujetti le local à chauffer, on dispose avantageusement d'une sonde placée extérieurement sur la façade du local à chauffer.

Le positionnement de cette sonde correspondra à l'orientation des pièces principales et devrait être en dehors de l'influence de sources de chaleur qui pourrait perturber la mesure, telles que par exemple bouche d'extraction d'air, proximité d'une fenêtre, d'une cheminée de feu ouvert, etc....

La sonde extérieure va donc donner une image de la température extérieure au local, et en fonction de celle-ci, selon la présente invention, on détermine la quantité de chaleur à stocker selon une consigne de charge de référence, puis on corrige la dite consigne de charge au niveau de chaque accumulateur en fonction du besoin réel demandé à l'accumulateur concerné pendant la période précédente.

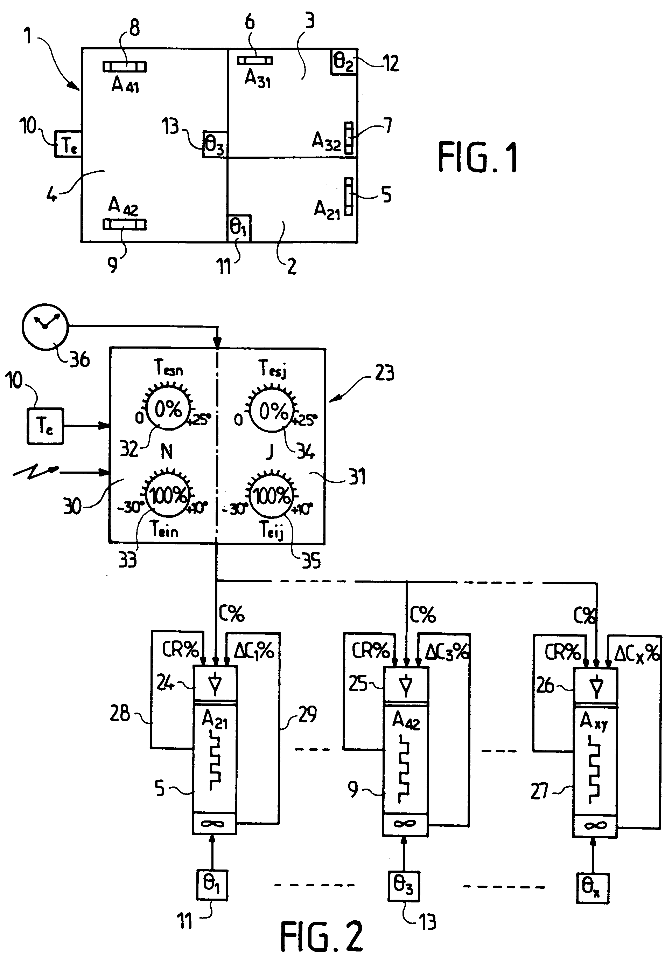

A la figure 1, le local 1 comporte plusieurs pièces 2, 3, 4 dans chacune desquelles sont disposés un ou plusieurs accumulateurs A₂₁, A_{31,} A₃₂, A₄₁, A₄₂ .... repérés 5 à 9.

Comme évoqué ci-dessus, la température extérieure Tₑ est recueillie au moyen d'une sonde extérieure 10, et on contrôle la température intérieure Tᵢ par au moins un thermostat d'ambiance.

Plus précisément, on dispose autant de thermostats d'ambiance Θ₁, Θ₂, Θ₃, ...., repérés 11 à 13, que de zones du local à chauffer, c'est-à-dire par exemple autant que de nombres de pièces 2, 3, 4 du local.

Le nombre et la puissance de chaque appareil de chauffage seront déterminés par l'installateur en fonction de ma structure des pièces, de leurs affectations, des déperditions du local afin d'obtenir une répartition judicieuse des masses chauffantes dans l'ensemble du local à chauffer.

Cela étant, il est à noter que, selon la présente invention, pour une zone donnée du local à chauffer, c'est-à-dire par exemple pour une pièce, on charge le ou les accumulateurs concernés à une valeur telle que le chauffage soit principalement effectué par rayonnement thermique, compte tenu de la situation vécue lors de la période précédente.

Par ailleurs, selon l'état du thermostat d'ambiance 11 à 13, on commande la décharge dynamique du ou des accumulateurs correspondant 5 à 9.

Dans une situation idéale, on pourrait imaginer un fonctionnement des accumulateurs sans décharge dynamique. Ce serait par exemple le cas si la température extérieure était constante et s'il n'y avait pas de modification du besoin réel demandé à l'accumulateur.

Si pour un accumulateur, on a fréquemment recours à la décharge dynamique au cours d'une période donnée, selon la présente invention, on va corriger la dite consigne de charge au niveau du dit accumulateur concerné en fonction de cette décharge dynamique.

Autrement dit, au cours du puisage, selon la présente invention, on va vérifier comment s'effectue la fourniture de l'énergie, soit par rayonnement, soit par décharge dynamique.

Si l'on constate que ce fonctionnement dynamique est très sollicité, ou s'il fonctionne pour de longues périodes, il faudra en conclure qu'une consigne de charge légèrement supérieure serait nécessaire.

Le procédé de la présente invention permet cette correction, et l'on compense, uniquement au niveau de l'appareil concerné, la consigne générale, afin d'affiner, pièce par pièce, cette dernière.

Bien que pour déterminer la consigne générale en fonction de la température extérieure, on pourrait utiliser une sonde de mesure de température délivrant un signal directement proportionnel à la température mesurée, pour améliorer le confort, on mesure dans le temps la température extérieure par l'intermédiaire d'une sonde dite "intégratrice", apte à réaliser un lissage de la courbe de température mesurée et tenir compte des écarts de température extérieure entre le jour et la nuit.

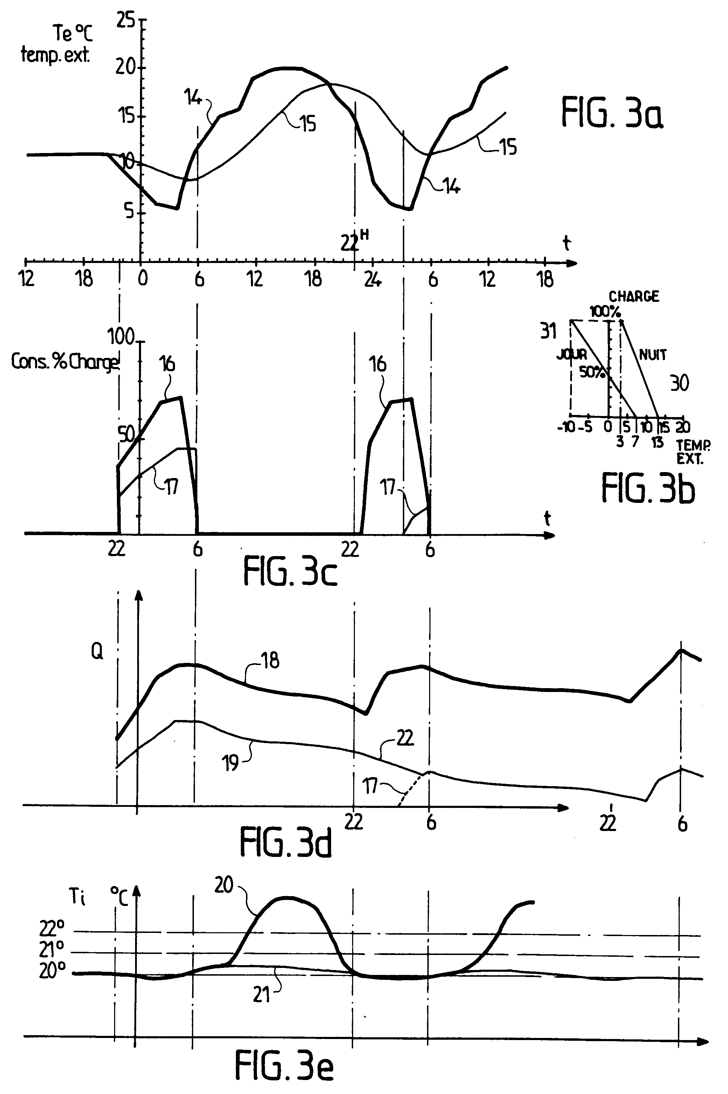

A titre d'exemple, la figure 3a montre en trait fort, l'évolution de la température prise avec une sonde normale, et en trait fin, l'évolution de la température prise avec une sonde intégratrice. Ces deux courbes sont respectivement repérées 14 et 15.

Sur la courbe 15, prise par la sonde intégratrice, l'écart entre le maximum mesuré et le minimum est moins important. De même, cette sonde permet d'intégrer un retard pour parvenir à une même température de seuil, lorsqu'on a des variations importantes entre jour et nuit.

Etant donné que l'accumulation se fait par priorité durant les heures creuses, c'est-à-dire la nuit, période où les températures sont généralement les plus froides, une sonde non intégratrice entraînerait des prises de charge importantes qui s'avèreraient excessives si la température extérieure remontait de façon sensible pendant la journée.

Une sonde intégratrice évite ce phénomène et tiendra en quelque sorte compte d'une moyenne "jour-nuit" et non de la valeur instantanée.

La figure 3c montre la répercution qu'amène la sonde intégratrice sur la consigne en pourcentage de charge. La courbe en trait fort, repérée 16, montre ce que serait la consigne avec une sonde instantanée, alors que la courbe en trait fin, repérée 17, montre une demande de charge beaucoup plus faible inhérente à la sonde intégratrice.

L'exemple décrit ci-dessus correspond à une journée d'entre-saisons dont la moyenne de température est de l'ordre de 15 °C et où il n'y a pratiquement pas besoin de chauffage. Une sonde instantanée entraînerait inutilement un niveau de charge de plus de 70 % alors qu'une sonde intégratrice limite cette charge à quelques pourcents.

En ce qui concerne la détermination de la quantité de chaleur à stocker, selon la présente invention, on définit au moins une relation 30' entre le niveau de charge à atteindre et la température extérieure mesurée, afin de faire évoluer la consigne de charge de référence entre 0 % de charge pour un seuil supérieur de température extérieure "Tₑₛ" et 100 % de charge pour un seuil inférieur de température extérieure "Tₑᵢ".

La figure 3b montre un exemple de relation 30' linéaire utilisée, au moins pendant la nuit, c'est-à-dire dans la phase d'accumulation où le tarif est le plus avantageux.

Dans l'exemple montré, on fixe le seuil supérieur de température extérieure "Tₑₛ" à 13 °C, et jusque cette température, on considère qu'il n'y a pas lieu de charger.

On fixe également le seuil équivalent à 100 % de charge qui correspondent dans le cas de la figure à une température extérieure de 3 °C dans le cas présent.

Outre cette première relation 30' définissant le niveau de charge pendant une première tranche horaire, notamment la nuit, on peut prévoir une seconde relation 31' entre le niveau de charge à atteindre et la température extérieure mesurée afin de définir le niveau de réserve minimale de charge à conserver pendant une deuxième tranche horaire, par exemple le jour.

Cette seconde relation 31' permettra de faire face à d'éventuelles variations de température importantes dans la journée correspondant à un refroidissement du climat.

Dans le cas des figures 3a et 3c, il n'y a pas de charge pendant la deuxième tranche horaire car la température extérieure pendant la période de journée est toujours supérieure au seuil supérieur de température extérieure soit 7 °C dans le cas présent.

Il est à noter que ces valeurs de seuil ne sont en aucun cas limitatives et qu'elles sont à adapter en fonction du climat et des caractéristiques du local à chauffer. De même, les périodes d'accumulation ont été choisies arbitrairement entre 22 H et 6 H du matin. Elles pourraient tout à fait être prévues à d'autres moments et suivre la période de délivrance de l'énergie à un tarif avantageux.

Par ailleurs, comme il a été prévu une possibilité de recharge des accumulateurs pour définir une réserve minimale de charge pendant une tranche horaire moins avantageuse sur le plan du coût de revient, il pourrait aussi être imaginé d'interdire toute charge automatique pendant une tranche horaire pendant laquelle le coût du kilo Watt serait très élevé. Néanmoins, on pourrait concevoir une dérogation manuelle à cette interdiction pour autoriser, en connaissance de cause, un certain confort.

La figure 3d illustre à titre d'exemple l'évolution de la quantité de chaleur contenue dans un accumulateur en fonction des périodes de charge et de décharge de ce dernier. La courbe en trait fort, repérée 18, correspond à une sonde instantanée, tandis que la courbe en trait fin, repérée 19 correspond à une régulation avec sonde dite "intégratrice".

Ces courbes correspondent dans le temps avec la température extérieure de la figure 3a qui montre tout d'abord une journée plus rude suivie d'une journée beaucoup plus agréable, la température extérieure atteignant les 20°C dans l'après-midi.

Avec une sonde instantanée, la consigne de charge 16 aurait provoqué une charge de l'accumulateur concerné à plus de 70 %. Pendant la journée suivante, la demande en énergie de chauffage a été faible, et au moment de la période de charge suivante, on reprovoque une charge importante encore sensiblement voisine d'un taux de 70 %.

Un tel fonctionnement va provoquer une surchauffe au niveau du local comme le montre la courbe 20 de la figure 3e.

En revanche, en utilisant une sonde intégratrice, l'évolution de la quantité de chaleur 19 en fonction du temps est beaucoup plus adaptée car la sonde va constater le radoucissement et demander à l'issue de cette journée plus douce un pourcentage de charge beaucoup plus faible et de ce fait, on arrivera à maintenir une température voisine de celle que l'on s'est fixée, par exemple 20°C, comme le montre par exemple la courbe en trait fin 21.

Il est à noter également qu'avantageusement selon la présente invention, on compare de façon continue, au niveau de chaque accumulateur, l'état de sa charge par rapport à la consigne de référence de charge, éventuellement corrigée.

Ainsi, comme le montre la zone 22 de la courbe 19 à la figure 3d, si la charge restante dans l'accumulateur est supérieure à la consigne de charge 17, on laissera le dit accumulateur hors tension. En revanche, dès que la charge constatée sera inférieure à la consigne de charge prévue, on le mettra sous tension.

La figure 2 illustre schématiquement une installation de chauffage d'un local domestique ou autre permettant la mise en oeuvre du procédé de la présente invention qui vient d'être décrit.

Comme nous l'avons signalé plus haut, cette installation comprend au moins un appareil de chauffage à accumulation, dit "accumulateur" 5-9, des moyens de mesure de la température extérieure au local, substantiellement constitués par la sonde extérieure 10, et des moyens de commande pour stocker périodiquement une quantité de chaleur au niveau du ou des dits accumulateurs.

Ces dits moyens de commande comprennent d'une part des moyens 23 pour délivrer une consigne de charge de référence à l'ensemble de l'installation fonction de la température extérieure au local, et d'autre part des moyens 24, 25, 26 pour corriger la dite consigne de charge au niveau de chaque accumulateur 5-9, 27 en fonction du besoin réel demandé à l'accumulateur concerné pendant la période précédente.

Comme nous l'avons vu précédemment, la dite sonde extérieure est avantageusement du type "intégratrice" afin de tenir compte des écarts de température extérieure entre le jour et la nuit.

En outre, l'installation comporte, par zone du local à chauffer 2,-4, au moins un thermostat d'ambiance 11, 12, 13.

Par ailleurs, au niveau de chaque accumulateur, il est prévu des moyens de comparaison, agissant de façon continue, pour vérifier l'état de sa charge par rapport à la dite consigne, schématisés ou 28 sur la figure 2.

En outre, chaque accumulateur présente des moyens pour relever le nombre et la durée de l'enclenchement de la turbine de décharge dynamique, schématisés en 29 sur la figure 2.

Il est à noter que c'est le thermostat d'ambiance 11 qui, lorsque la consigne de température souhaitée dans la pièce n'est pas atteinte, met en fonctionnement le ventilateur interne de l'accumulateur; c'est notamment ce fonctionnement de ventilateur que l'on contrôle pour éventuellement corriger la consigne de charge de l'accumulateur concerné.

Ainsi, comme le montre la figure 2, chaque accumulateur reçoit une consigne C %, qui est ensuite corrigée éventuellement par une charge complémentaire nécessaire Δ C%, cette charge totale étant ensuite comparée à la charge restante dans l'accumulateur CR%.

Comme évoqué précédemment, si celle-ci est inférieure à la consigne de charge, on place l'accumulateur sous tension. Au contraire, si la charge restante est supérieure à la consigne, il n'y a pas lieu de charger supplémentairement l'accumulateur.

Pour autoriser une évolution de la consigne de charge de référence entre O % de charge pour un seuil supérieur de température extérieure "Tₑₛ" et 100 % de charge pour un seuil inférieur de température extérieure "Tₑᵢ", les dits moyens 30 de commande de l'installation comportent en outre des moyens pour fixer au moins un niveau de charge à atteindre par rapport à la température extérieure mesurée.

Ces moyens 30 sont substantiellement constitués par un dispositif électronique qui permet de définir une relation, notamment linéaire, entre d'une part la température extérieure et d'autre part le pourcentage de charge à consigner. Une telle courbe a déjà été décrite précédemment en regard de la figure 3b.

Ces moyens 30 sont généralement opérationnels pendant la nuit c'est-à-dire lors du tarif préférentiel de consommation.

Pour pouvoir éventuellement charger les accumulateurs le jour, à un taux de charge différent de celui de la nuit, les dits moyens de commande de l'installation comportent avantageusement des moyens 31 pour fixer un niveau de réserve minimale de charge à conserver pendant la décharge des accumulateurs.

Ces moyens 31 sont constitués d'une façon similaire aux moyens 30 précités. Les réglages des différents seuils de jour et de nuit supérieurs et inférieurs "Tₑₛⱼ, Tₑₛₙ, Tₑᵢⱼ, Tₑᵢₙ, étant par exemple fixés à l'aide de potentiomètres 32 à 35 gradués en fonction de la température extérieure de seuil.

Pour tenir compte de la tarification différente de l'énergie, les moyens de commande présenteront des moyens pour déclencher la charge des accumulateurs en fonction d'un signal 36 de commande, qui peut être un signal d'horloge ou une fréquence détectable.

Naturellement, d'autres mises en oeuvre de la présente invention, à la portée de l'homme de l'art, pourraient être envisagées sans pour autant sortir du cadre de la présente demande.

En particulier, il peut être prévu tout un système de relayage permettant de protéger ou de commander la présente installation en dérogation du fonctionnement optimal décrit ci-dessus.

## Revendications

1. Procédé de chauffage d'un local domestique ou autre dans lequel on stocke périodiquement l'énergie calorifique dans au moins un appareil de chauffage à accumulation, dit "accumulateur" (5-9), et on puise l'énergie en fonction des besoins du local (1-4), caractérisé par le fait que :
a) on détermine la quantité de chaleur à stocker selon une consigne de charge de référence fonction de la température extérieure au local,
b) on corrige la dite consigne de charge au niveau de chaque accumulateur (5-9) en fonction du besoin réel demandé à l'accumulateur concerné pendant la période précédente.

2. Procédé de chauffage selon la revendication 1, caractérisé par le fait que, pour une zone donnée (2-4) du local (1) à chauffer, on charge le ou les accumulateurs (5-9) concernés à une valeur telle que le chauffage soit principalement effectué par rayonnement thermique compte tenu de la situation vécue lors de la période précédente.

3. Procédé de chauffage selon la revendication 1, caractérisé par le fait que la dite correction de charge de chaque accumulateur (5-9) est réalisée selon la décharge dynamique de l'accumulateur concerné.

4. Procédé de charge selon la revendication 2, caractérisé par le fait que l'on contrôle la température intérieure par au moins un thermostat d'ambiance et que l'on dispose autant de thermostats d'ambiance (11-13) que de zones du local à chauffer (2-4).

5. Procédé de chauffage selon la revendication 4, caractérisé par le fait que l'on commande la décharge dynamique du ou des accumulateurs (5-9) selon l'état du thermostat d'ambiance (11-13) associé.

6. Procédé de chauffage selon la revendication 1, caractérisé par le fait que l'on compare de façon continue, au niveau de chaque accumulateur, l'état de sa charge par rapport à la consigne de référence de charge, éventuellement corrigée.

7. Procédé de chauffage selon la revendication 1, caractérisé par le fait que l'on mesure dans le temps la température extérieure par l'intermédiaire d'une sonde (10), dite "intégratrice", apte à réaliser un lissage de la courbe de température mesurée et tenir compte des écarts de température extérieure entre le jour et la nuit.

8. Procédé de chauffage selon la revendication 1, caractérisé par le fait que, pour déterminer la quantité de chaleur à stocker, on définit au moins une relation 30' entre le niveau de charge à atteindre et la température extérieure mesure afin de faire évoluer la consigne de charge de référence entre 0 % de charge pour un seuil supérieur de température extérieure et 100 % de charge pour un seuil inférieur de température extérieure.

9. Procédé de chauffage selon la revendication 8, caractérisé par le fait que l'on prévoit une première relation 30' pour définir le niveau de charge pendant une première tranche horaire, et une deuxième relation 31' pour définir le niveau de réserve minimale de charge à conserver pendant une deuxième tranche horaire.

10. Installation de chauffage d'un local domestique ou autre, autorisant la mise en oeuvre du procédé selon la revendication 1, comprenant au moins un appareil de chauffage à accumulation, dit "accumulateur" (5-9), des moyens (10) de mesure de la température extérieure au local, et des moyens de commande pour stocker périodiquement une quantité de chaleur au niveau du ou des dits accumulateurs (5-9), caractérisée par le fait que les dits moyens de commande comprennent :
- des moyens (23) pour délivrer une consigne de charge de référence à l'ensemble de l'installation fonction de la température extérieure au local,
- des moyens (24-26) pour corriger la dite consigne de charge au niveau de chaque accumulateur (5-9) en fonction du besoin réel demandé à l'accumulateur concerné pendant la période précédente.

11. Installation selon la revendication 10, caractérisée par le fait qu'elle comporte au moins un thermostat d'ambiance (11-12) par zone (2-4) du local à chauffer.

12. Installation selon la revendication 10, caractérisée par le fait qu'elle comporte une sonde (10) extérieure dite "intégratrice", apte à réaliser un lissage de la courbe de température mesurée et tenir compte des écarts de température extérieure entre le jour et la nuit.

13. Installation selon la revendication 10, caractérisée par le fait que les dits moyens de commande comportent en outre des moyens (28) de comparaison, au niveau de chaque accumulateur (5-9) agissant de façon continue, pour vérifier l'état de sa charge par rapport à la dite consigne.

14. Installation selon la revendication 10, caractérisée par le fait que chaque accumulateur présente des moyens (29) pour relever le nombre et la durée d'enclenchement de la turbine de décharge dynamique.

15. Installation selon la revendication 10, caractérisée par le fait que les dits moyens de commande comportent en outre des moyens (30) pour fixer au moins un niveau de charge à atteindre par rapport à la température extérieure mesurée, apte à faire évoluer la consigne de charge de référence entre 0 % de charge pour un seuil supérieur de température extérieure et 100 % de charge pour un seuil inférieur de température extérieure.

16. Installation selon la revendication 10, caractérisée par le fait que les dits moyens de commande comportent en outre des moyens (31) pour fixer un niveau de réserve minimal de charge à conserver pendant la décharge des accus.

17. Installation selon la revendication 10, caractérisée par le fait qu'elle comporte des moyens (36) pour déclencher la charge (12) des accumulateurs en fonction d'un signal de commande correspondant à des tarifications différentes de l'énergie.
